Europäisches Patentamt

European Patent Office

Office européen des brevets

(11) Veröffentlichungsnummer: **0 438 970 A2**

# (12) EUROPÄISCHE PATENTANMELDUNG

(21) Anmeldenummer: 90810837.6

(51) Int. Cl.⁵: **B05C 17/00**

(22) Anmeldetag: 31.10.90

(30) Priorität: 23.01.90 CH 214/90

(43) Veröffentlichungstag der Anmeldung:
31.07.91 Patentblatt 91/31

(84) Benannte Vertragsstaaten:
AT BE CH DE DK ES FR GB GR IT LI LU NL SE

(71) Anmelder: **Läser, Bernhard**
**Büelweg 14**
**CH-7252 Klosters - Dorf(CH)**

(72) Erfinder: **Läser, Bernhard**
**Büelweg 14**
**CH-7252 Klosters - Dorf(CH)**

(74) Vertreter: **Feldmann, Clarence Paul et al**
**c/o Patentanwaltsbüro FELDMANN AG**
**Postfach Kanalstrasse 17**
**CH-8152 Glattbrugg(CH)**

(54) Spendevorrichtung.

(57) Die Spendevorrichtung ist beispielsweise geeignet, um Fett auf das Gewinde an einem Rohrende aufzutragen oder Flussmittel auf einer Lötverbindung an einem Rohr.

Die Spendevorrichtung besteht aus einem Handgriff (3), der in ein Balg (2) einschraubbar ist. Durch ein Zuführrohr (1) wird das flüssige oder pastöse Mittel aus dem Balg auf die gewünschte Stelle gepresst. Eine Verteileinheit bestehend aus einem auf dem Zuführrohr (1) drehbar gelagerten Herzstück (8) mit Bürste (6) und Führungsbügel (5) dient dazu das Mittel auf das Rohrende zu verteilen.

FIG.1

Xerox Copy Centre

## SPENDEVORRICHTUNG

Die vorliegende Erfindung betrifft eine Spendevorrichtung zum Auftragen eines flüssigen oder pastösen Mittels auf den Umfang eines hohlzylindrischen Elementes.

Das Aufbringen von Dichtfett auf das Aussengewinde einer Rohrverbindung vor und nach dem Belegen mit Hanf geschieht heute durchwegs direkt mit den Fingern. Dies ist nicht nur schlecht, weil eine Menge Dichtfett an den Fingern bleibt und in einem Lappen oder an der Hose abgewischt wird, sondern die Arbeit ist unangenehm, weil die Hände immer verschmiert, respektiv abgewischt werden müssen.

Aehnlich verhält es sich beim Auftragen von Schmiermittel an die Enden von Kunststoffrohren, die mittels Steckmuffenverbindungen zusammen gekoppelt werden sollen. Auch zum Auftragen von Flüssigmittel an zu lötende Rohrverbindungen hat man bis heute keine vernünftige Lösung.

Die vorliegende Erfindung stellt sich daher die Aufgabe, eine Spendevorrichtung zum Auftragen und gleichmässigen Verteilen von flüssigen oder pastösen Mitteln auf den Umfang eines hohlzylindrischen Elementes zu ermöglichen, ohne dass man sich dabei die Hände beschmutzen muss.

Diese Aufgabe löst eine Spendevorrichtung mit Merkmalen des Anspruches 1. Weitere Ausführungsvarianten ergeben sich aus den abhängigen Ansprüchen.

In der einzigen Figur der beiliegenden Zeichnung ist ein Ausführungsbeispiel der Erfindung dargestellt und anhand der nachfolgenden Beschreibung erläutert.

Am einen Ende des zentralen Zuführrohres 1 befindet sich ein beispielsweise mit Fett gefüllter Balg 2. Durch Pressen des Balges 2 in Richtung F kann Fett durch das zentrale Zuführrohr 1 gepresst werden, so dass es bei A austritt. Auf derselben Seite des Zuführrohres 1 auf der der Balg 2 angekoppelt ist, ist ein Handgriff 3 befestigt. Das Fett kann durch Halten am Handgriff 3 und Drücken auf den Balg 2 einhändig ausgepresst werden.

Auf dem Zuführrohr 1 ist auf der dem Balg 2 und Handgriff 3 gegenüberliegenden Seite eine Verteileinheit 4 bestehend aus einem Führungsbügel 5 und einer Bürste 6 angeordnet.

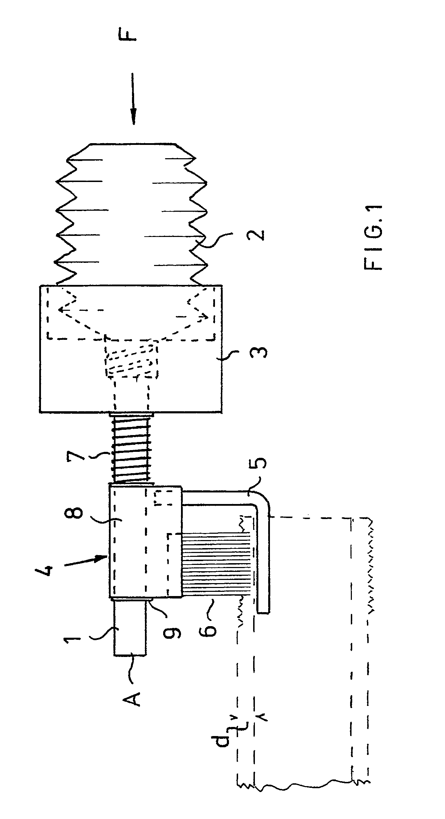

Der Balg 2 ist mit dem Zuführrohr 1 oder mit dem Handgriff 3 lösbar verbunden, so dass er nach dem Auspressen des Fettes losgeschraubt und entweder nachgefüllt oder durch einen neuen, vollen Balg 2 ersetzt werden kann. Der Handgriff 3 ist mit dem Zuführrohr 1 entweder fest oder drehbar gelagert verbunden. Er kann, wie in Figur 1 gezeigt, glockenförmig ausgebildet sein, so dass er den Balg 2 mindestens teilweise überdeckt.

Die Verteileinheit 4 ist auf dem Zuführrohr 1 drehbar gelagert oder fest verbunden. Die auf dem Zuführrohr 1 lagernde Verteileinheit 4 ist zur Austrittöffnung A hin mittels einem Segerring 9 gegen Verschiebung in axialer Richtung gesichert. Eine zwischen dem glockenförmigen Handgriff 3 und der Einheit 4 auf dem Zuführrohr 1 angebrachte Druckfeder 7 wirkt als ein hemmendes Mittel, welches die freie Drehbarkeit der Einheit 4 bremst.

Die Distanz der Bürste 6 zum Führungsbügel 5 kann durch Verschieben des Führungsbügels 5 im Herzstück 8 der Verteileinheit4 verstellt werden, so dass die Distanz zwischen der Bürste 6 und dem Führungsbügel 5 entsprechend der Wanddicke des Rohres angepasst werden kann. Im Normalfall reicht jedoch die Flexibilität der Borsten der Bürste 6 um die Dickenunterschiede auszugleichen.

In der Anwendung wird die Spendevorrichtung wie folgt eingesetzt:

Das im Balg 2 befindliche flüssige oder pastöse Mittel wird mittels Druck in Richtung F durch das Zuführrohr 1 zur Oeffnung A gepresst. Diese Quantität des Mittels wird an einem Ort im Endbereich eines hohlzylindrischen Elementes, beispielsweise eines Rohres oder einer Muffe aufgebracht. Nun wird, wie in der Zeichnung gezeigt, das Rohr zwischen Führungsbügel 5 und Bürste 6 genommen und mit der Spendevorrichtung der ganze Zylinderumfang 6 umfahren. Die Bürste 6 verteilt dabei das Mittel entlang dem ganzen Umfang.

Bei Fertigung grosser Stückzahlen lassen sich Zuführrohr 1 und Handgriff 3 auch mittels einer entsprechender Spritzform einstückig fertigen. Es kann ferner vorteilhaft sein, den Führungsbügel 5 mit Kunststoff zu beschichten oder ganz aus Kunststoff zu fertigen, da so die Reibung vermindertwerden kann. Durch entsprechende Formgebung des Bügels 5 eignet sich dieser auch für die Führung entlang der Aussenwand des hohlzylindrischen Elementes, so dass dann das flüssige oder pastöse Mittel aufgetragen werden kann.

### Patentansprüche

1. Spendevorrichtung zum Auftragen eines flüssigen oder pastösen Mittels auf den Umfang eines hohlzylindrischen Elementes, dadurch gekennzeichnet, dass am einen Ende eines zentralen Zuführrohres (1) der Spendevorrichtung ein Handgriff (3) angebracht ist, in dem ein mit dem aufzutragenden Mittel gefüllter, auswechselbarer Balg (2) angeordnet ist, und dass auf dem Zuführrohr (1) eine Verteileinheit (4), bestehend aus einem Führungsbügel (5) und einer Bürste (6) angeordnet ist.

2

2. Spendevorrichtung nach Anspruch 1, dadurch gekennzeichnet, dass der mit Fett gefüllte Balg (2) mittels einer lösbaren Verbindung am Handgriff (3) befestigt ist.

3. Spendevorrichtung nach Anspruch 1, dadurch gekennzeichnet, dass die Verteileinheit (4) auf dem Zuführrohr (1) drehbar gelagert ist.

4. Spendevorrichtung nach Anspruch 1, dadurch gekennzeichnet, dass der Führungsbügel (5) und die gegen ihn gerichtete Bürste (6) in einer einstellbaren Distanz zueinander angeordnet sind.

5. Spendevorrichtung nach Anspruch 1, dadurch gekennzeichnet, dass der Handgriff (3) auf dem Zuführrohr (1) drehbar gelagert ist.

6. Spendevorrichtung nach Anspruch 2, dadurch gekennzeichnet, dass der Balg (2) mittels einer lösbaren Verbindung am Zuführrohr (1) befestigt ist.

7. Spendevorrichtung nach Anspruch 1 dadurch gekennzeichnet, dass der Handgriff (3) glokkenförmig ausgebildet und der Balg (2) mindestens teilweise dort untergebracht ist.

8. Spendevorrichtung nach Anspruch 3, dadurch gekennzeichnet, dass hemmende Mittel vorgesehen sind, die die Drehbarkeit der Verteileinheit (1) bremsen.

FIG.1